# EUROPÄISCHE PATENTANMELDUNG

(11) **EP 0 674 118 A1**
(43) Veröffentlichungstag der Anmeldung: **27.09.1995**
(21) Anmeldenummer: 95103397.6
(22) Anmeldetag: 09.03.1995
(51) Int. Cl.: F16D 66/02, B60T 17/22

(54) **Einrichtung zur Überwachung des Kolbenhubs eines pneumatisch betätigbaren Bremszylinders**

(30) Priorität: 18.03.1994 DE 4409351
(71) Anmelder: KNORR-BREMSE SYSTEME FÜR NUTZFAHRZEUGE GmbH, 80809 München (DE)
(72) Erfinder: Bieker, Dieter, D-83064 Raubling (DE); Baumgartner, Hans, D-85368 Moosburg (DE)

(57) **Zusammenfassung**

Es wird eine Einrichtung zur Überwachung des Kolbenhubs eines pneumatisch betätigbaren Bremszylinders (40) offenbart, dessen Gehäuse (45,46) von einer flexiblen Membran (44) luftdicht in zwei Kammern (40a,40b) unterteilt ist, wobei die erste Kammer (40a) mit einer Druckluft-Zuleitung in Verbindung steht und wobei in der zweiten Kammer (40b) ein Kolben (47,48) geführt ist, der über einen von einer Druckfeder (41) vorgespannten Kolbenteller (43) an der Membran (44) anliegt und eine mittige Gehäuseöffnung durchdringt. Um eine möglichst platzsparende und gleichzeitig einfach zu montierende und schnell zu justierende Überwachungseinrichtung zu schaffen, wird von der Erfindung vorgeschlagen, eine Fühlereinrichtung vorzusehen, welche die Bewegung des Kolbens (47,48) im Inneren der zweiten Kammer (40b) erfaßt und bei einem vorbestimmten Kolbenhub ein Signal erzeugt.

## Beschreibung

Die vorliegende Erfindung bezieht sich auf eine Einrichtung zur Überwachung des Kolbenhubs eines pneumatisch betätigbaren Bremszylinders, der gemäß dem Oberbegriff des Anspruchs 1 konstruiert und insbesondere zur Betätigung der Scheiben- oder Trommelbremsen von Nutzfahrzeugen vorgesehen ist.

Pneumatisch betätigbare Bremszylinder der gattungsgemäßen Art werden zur Betätigung der jeweiligen Zuspannvorrichtung von Scheiben- oder Trommelbremsen eingesetzt. Sie bestehen aus einem Gehäuse, das von einer flexiblen Membran luftdicht in zwei Kammern unterteilt ist, wobei die erste Kammer mit einer Druckluft-Zuleitung in Verbindung steht und wobei in der zweiten Kammer ein Kolben geführt ist, der über einen von einer Druckfeder vorgespannten Kolbenteller an der Membran anliegt und eine mittige Gehäuseöffnung durchdringt. Wenn der ersten Kammer über die Zuleitung Druckluft zugeführt wird, bewegt sich die Membran entsprechend, wodurch der Kolben einen Arbeitshub ausführt, der beispielsweise auf die Hebelmechanik einer Zuspannvorrichtung übertragen wird. Da einerseits diese Hebelmechanik vor dem Eindringen von Wasser oder Schmutz geschützt werden muß und da andererseits die den Kolben beherbergende zweite Kammer notwendigerweise eine Luft-Ausgleichsöffnung besitzt, über die ggf. Schmutz in das Innere der Kammer gelangen kann, weist die für den Kolben vorgesehene Gehäuseöffnung bei diesen bekannten Bremszylindern oftmals einen Faltenbalg auf, der am Kolben anliegt und gegenüber dem Inneren der zweiten Kammer abgedichtet ist, so daß der im Inneren der Kammer befindliche Schmutz nicht in die Zuspannvorrichtung eindringen kann.

Druckluftbetätigte bzw. pneumatische Scheiben- oder Trommelbremsen sind stets mit einer automatischen Nachstellvorrichtung ausgerüstet, die den Verschleiß der Bremsbacken und den der Scheibe bzw. Trommel kompensiert und so das Lüftspiel (Abstand zwischen Bremsbacke und Scheibe bzw. Trommel) konstant hält. Wenn jedoch die Bremsbacken weitgehend abgerieben sind, muß ein entsprechender Wechsel gegen neue Bremsbacken durchgeführt werden; um dem Fahrer auf diesen Umstand hinzuweisen, ist bei vielen Zuspannvorrichtungen eine Meßvorrichtung vorgesehen, welche die momentane Dicke oder zumindest eine bestimmte Restdicke der Bremsbacken erfaßt und dem Fahrer zur Anzeige bringt. Es kann jedoch nicht ausgeschlossen werden, daß diese Meßvorrichtungen stets zuverlässig arbeiten, so daß u.U. mit einem Bremsenversagen aufgrund verbrauchter Bremsbacken zu rechnen ist.

Weiterhin kann nicht mit Sicherheit ausgeschlossen werden, daß die Nachstellvorrichtung stets fehlerfrei arbeitet; vielmehr ist es möglich, daß durch Verschleiß oder Bruch eines wesentlichen Teils der Zuspannvorrichtung ein Zustand auftritt, bei dem keine ausreichende Zuspannkraft erzeugt wird, was wiederum zu einem Bremsenversagen führen kann.

Die beiden vorgenannten Ausfälle äußern sich dadurch, daß der Kolben des Bremszylinders einen größeren Hub ausführt, als dies bei einer voll funktionsfähigen Bremse der Fall wäre. Daher ist es möglich, durch Erfassen eines vorbestimmten Kolbenhubs, der im Normalfall nicht auftreten kann, eine Warnanzeige bereitzustellen, die den Fahrer auf den Defekt der Bremsanlage aufmerksam macht. Im Stand der Technik wurde bereits vorgeschlagen, zu diesem Zweck einen Mikroschalter vorzusehen, der an einer dem unzulässigen Hubbereich des Kolbens entsprechenden Stelle im Arbeitsweg den Kolben oder der von diesem betätigten Vorrichtung angeordnet ist. Ein Nachteil dieser bekannten Lösung liegt jedoch darin, daß die Anordnung derartiger Mikroschalter zumindest bei für Scheibenbremsen vorgesehenen Zuspannvorrichtungen aufgrund der erforderlichen kompakten Bauweise auf große Probleme stößt.

Der Erfindung liegt die Aufgabe zugrunde, eine Einrichtung zur Überwachung des Kolbenhubs eines pneumatisch betätigbaren Bremszylinders zu schaffen, die bei allen Arten von Zuspannvorrichtungen problemlos verwendet werden kann.

Diese Aufgabe wird erfindungsgemäß mit dem im Kennzeichnungsteil des Anspruchs 1 angegebenen Maßnahmen gelöst.

Der wesentliche Erfindungsgedanke ist demnach darin zu sehen, eine Fühlereinrichtung vorzusehen, welche die Bewegung des Kolbens im Inneren der zweiten Kammer erfaßt und bei einem vorbestimmten Kolbenhub ein Signal erzeugt. Hierdurch ist es möglich, einen äußerst kompakten Aufbau der Hubüberwachungseinrichtung zu schaffen, der es ermöglicht, auch bei beengten Platzverhältnissen eine genaue und zuverlässige Anzeige eines unzulässig großen Hubbereichs herbeizuführen. Darüber hinaus gestaltet sich die Montage des Bremszylinders an der Zuspannvorrichtung wesentlich einfacher, da es nicht nötig ist, eine genaue Justage zu einem externen Mikroschalter durchzuführen.

Gemäß der im Anspruch 2 angegebenen Weiterbildung der Erfindung wird die Fühlereinrichtung aus einem magnetischen Fühlerelement gebildet, das auf das Magnetfeld eines vom Kolben bewegbaren Permanentmagneten anspricht. Diese berührungslose Erfassung des Kolbenhubs zeichnet sich durch hohe Zuverlässigkeit aus, da selbst starker Schmutz oder Wasser die Signalerzeugung kaum nennenswert beeinflussen.

Als besonders vorteilhaft erweist sich nach der Lehre des Anspruchs 3 in diesem Zusammenhang die Verwendung eines Reed-Kontaktes für das magnetische Fühlerelement. Ein derartiger Reed-Kontakt ist nämlich einerseits ein sehr preiswertes Bauteil und zeichnet sich andererseits durch hohe Zuverlässigkeit, sichere Kontaktgabe und einfache Montage aus. Als besonders vorteilhaft erweist es sich gemäß Anspruch 4 bei Verwendung eines Reed-Kontaktes, diesen so anzuordnen, daß er im normalen Arbeits-Hubbereich des Kolbens ständig im Magnetfeld des Permanentmagneten liegt, wobei eine vom Kolben betätigte Verstellvorrichtung vorzusehen ist, die den Permanentmagneten erst bei einem vorbestimmten Maximalhub aus dem Erfassungsbereich des Reed-Kontaktes herausbewegt. Hierdurch wird erreicht, daß die beiden inneren Blattfedern des Reed-Kontaktes im Normalbetrieb ständig geschlossen sind und erst im anzuzeigenden Fehlerfall geöffnet werden. Da die im Fahrzeug vorzusehende Auswertungs- oder Anzeigeeinrichtung somit eine Warnanzeige nur dann auslöst, wenn der Reed-Kontakt geöffnet wird, wird eine sogenannte "Fail-safe-Anordnung" geschaffen, da auch ein Defekt des Reed-Kontaktes erkannt wird.

Nach der Lehre des Anspruchs 5 ist es besonders von Vorteil, den Permanentmagneten an einem elastischen Element zu lagern, dessen Relativlage zum Reed-Kontakt durch eine vom Kolben herbeigeführte elastische Verformung geändert werden kann. Hierdurch wird eine vergleichsweise einfache und preiswerte Anordnung des Permanentmagneten geschaffen, die sich auch durch eine sehr zuverlässige Betätigung sowie durch einfache Justierbarkeit auszeichnet.

Als elastisches Element kann gemäß der Lehre des Anspruchs 6 ein aus einem elastisch verformbaren Material bestehendes Formteil vorgesehen werden, das vorzugsweise an der die Gehäuseöffnung aufweisenden Vorderwand der zweiten Kammer befestigt wird. Wenn das Formteil mit einer der Gehäuseöffnung angepaßten Ausnehmung versehen wird und wenn ferner Außenkonturen vorgesehen werden, die im wesentlichen dem Verlauf der an die genannte Vorderwand angrenzenden Seitenwandung der zweiten Kammer angepaßt sind, ist es darüber hinaus möglich, das Formteil ggf. in einem Preßsitz sicher, einfach und verdrehfest in der Kammer anzuordnen. Weiterhin ist es vorteilhaft, an einer dem Reed-Kontakt gegenüberliegenden Stelle des Formteils eine Ausnehmung zur Aufnahme des Permanentmagneten auszubilden, oberhalb der ein Vorsprung angeformt ist, den der Kolbenteller bei dem vorbestimmten Maximalhub in Axialrichtung niederdrückt. Infolge dieser Verformung des Formteils wird der Permanentmagnet ebenfalls axial gegenüber dem Reed-Kontakt versetzt, so daß dieser nicht mehr im Bereich des Magnetfelds liegt und dadurch öffnet, was als Warnanzeige ausgewertet werden kann. Neben der einfachen Lagerung und Montage des Permanentmagneten wird hierdurch eine simple und dennoch präzise einstellbare Verstellung des Permanentmagneten zur Signalerzeugung geschaffen.

Alternativ kann nach der Lehre des Anspruchs 9 als elastisches Element eine Formfeder vorgesehen werden, die an der die Gehäuseöffnung aufweisenden vorderwand der zweiten Kammer befestigt wird und die vorzugsweise einen den Permanentmagneten umschlingenden Abschnitt sowie einen Federbügel-Abschnitt aufweist, der derart in Richtung zum Kolbenteller hin gebogen ist, daß ihn dieser bei dem vorbestimmten Maximalhub verschwenkt und damit den Permanentmagneten aus dem Erfassungsbereich des Reed-Kontaktes herausbewegt. Durch geeignete Einstellung der Länge und/oder Neigung des Federbügel-Abschnitts kann auch hier der zu einer Signalabgabe führende Hubbereich sehr einfach justiert werden.

Wenn keine "Fail-safe-Anordnung" erforderlich oder gewünscht ist, kann der Permanentmagnet anstelle an den vorstehenden erwähnten elastischen Elementen gemäß Anspruch 10 auch am Kolben oder an dessen Kolbenteller derart befestigt werden, daß er bei Erreichen des vorbestimmten Maximalhubs in den Erfassungsbereich des Reed-Kontaktes gerät. Die inneren Blattfedern des Reed-Kontaktes werden hier also erst im Falle der anzuzeigenden Hubüberschreitung geschlossen. Da der Kolben aufgrund seiner Befestigung an der Membran seitlichen Schwankungen ausgesetzt ist, empfiehlt es sich bei` dieser Ausführungsform der Erfindung allerdings, entsprechend der Lehre des Anspruchs 11, den Permanentmagnet als Ringmagnet auszubilden, der an einem am Kolbenteller befestigten Montagebügel angeordnet ist, wobei ferner zwei Reed-Kontakte vorgesehen werden sollten, die einander in bezug zur Gehäuseöffnung diametral gegenüberliegen. Auch bei einer Schieflage des Kolbens wird daher stets eine Signalerzeugung herbeigeführt. Die beiden Reed-Kontakte werden elektrisch parallelgeschaltet; ggf. können auch mehr als zwei Reed-Kontakte verwendet werden.

Als besonders vorteilhaft im Hinblick auf die Montage und den Anschluß der zur Auswertungsschaltung führenden Verkabelung erweist es sich, wenn der Reed-Kontakt als integrale Baueinheit mit einer Steckerbuchse ausgebildet ist, die an der Seitenwandung der zweiten Kammer befestigt wird, und wenn in der Seitenwandung eine Öffnung ausgebildet wird, über die das Magnetfeld des Permanentmagneten auf den Reed-Kontakt einwirken kann. Auch der Austausch eines defekten Reed-Kontaktes erweist sich dann trotz der gehäusinneren Erfassung als äußerst einfach. Die Steckerbuchse kann lediglich einen einpoligen Anschlußstift aufweisen, der an die erste Blattfeder des Reed-Kontaktes angeschlossen ist, wobei die zweite Blattfeder des Reed-Kontaktes elektrisch mit einem Befestigungselement der Steckerbuchse verbunden wird, die über das Gehäuse Massekontakt herstellt. Diese Lösung ist gegenüber einer zweipoligen Lösung unaufwendiger, da lediglich ein Leitungskabel benötigt wird; gleichwohl kann bei Bedarf auch eine zweipolige Steckerbuchse verwendet werden.

Als Alternative zu dem vorstehend erläuterten Reed-Kontakt kann gemäß Anspruch 14 für das magnetische Fühlerelement auch eine Induktionsspule verwendet werden, die vorzugsweise in den Faltenbalg einvulkanisiert wird; in diesem Fall sollte der Permanentmagnet am Kolben befestigt werden. Vorzugsweise wird die Induktionsspule in demjenigen Bereich des Faltenbalgs einvulkanisiert, an dem dieser an der Gehäuseöffnung befestigt ist. Insgesamt wird hierdurch eine sehr kompakte und einfach zu montierende Erfassungseinrichtung geschaffen. Allerdings wird dieser Vorteil damit erkauft, daß von der Induktionsspule lediglich ein Impulssignal geliefert wird, das von einer geeigneten Auswertungselektronik oder dergleichen aufbereitet werden muß. Bei den derzeit in Fahrzeugen zur Verfügung stehenden Steuerungselektroniken dürfte dies jedoch keine große Mühe bereiten.

Anstelle des magnetischen Fühlerelements kann nach der Lehre des Anspruchs 17 erfindungsgemäß als Fühlereinrichtung auch ein im Gehäuseinneren angeordneter Schalterkontakt verwendet werden, der vom Kolben oder von dessen Kolbenteller bei dem vorbestimmten Kolbenhub betätigt wird. Diese Lösung hat unter Umständen den Vorteil einer noch preisgünstigeren Herstellung.

Als Schalterkontakt wird vorzugsweise ein Ringkontakt verwendet, der im Faltenbalg an dessen Befestigungsbereich an der Gehäuseöffnung zumindest teilweise einvulkanisiert ist und von einem am Kolben geführten, mit einer Druckfeder vorgespannten und topfartig geformten Betätigungselement betätigt wird. Mit dieser Anordnung wird ein sehr kompakter Aufbau erzielt, der auch eine vergleichsweise einfache Montage gestattet. Wenn der Ringkontakt in vorteilhafter Ausgestaltung in Form eines zwei übereinanderliegende Kontaktflächen aufweisenden Ringschalters ausgebildet wird, der vollständig im Befestigungsbereich des Faltenbalgs einvulkanisiert ist, und wenn das Betätigungselement so gestaltet wird, daß es die beiden Kontaktflächen durch Druckausübung auf den Befestigungsbereich des Faltenbalgs schließt, wird eine vollkommen gekapselte Ausführung erreicht, die entsprechend zuverlässig arbeitet.

Als etwas kostengünstigere Alternative kann gemäß der Lehre des Anspruchs 20 in Erwägung gezogen werden, den Ringkontakt mit nur einer ringförmigen Kontaktfläche zu versehen, die an dem Befestigungsbereich des Faltenbalgs freiliegt und bei dem vorbestimmten Kolbenhub durch das eine Kontaktspitze aufweisende Betätigungselement an Massepotential gelegt wird. Allerdings werden die geringeren Herstellungskosten hier mit einer gewissen Korrosionsanfälligkeit erkauft.

Eine besonders einfache und entsprechend billige Variante des erfindungsgemäßen Schalterkontakts wird erzielt, indem für diesen mindestens ein isolierend an der Seitenwandung der zweiten Kammer befestigtes Federelement vorgesehen wird, das zum Kolbenteller hin weist und bei dem vorbestimmten Kolbenhub durch diesen an Massepotential gelegt wird. Der kostengünstigen Herstellung stehen allerdings ebenfalls gewisse Kontaktprobleme bei Schmutz oder Nässe sowie eine erschwerte Montage gegenüber. Letztere läßt sich hingegen vereinfachen, wenn das Federelement gemäß Anspruch 22 mittels einer Steckerbuchse an der Seitenwandung der zweiten Kammer befestigt und elektrisch mit deren Anschlußstift verbunden wird.

Als letzte Alternative für den Schalterkontakt wird von der Erfindung schließlich ein in geringem Abstand zur kammerinneren Fläche des Kolbentellers angeordnetes Kontaktelement vorgeschlagen, das von einer Druckfeder unter eine Druckspannung gesetzt wird, die dem von der Druckfeder des Kolbens ausgeübten Druck entgegengerichtet und in ihrer Größe derart bemessen ist, daß sie bei dem vorbestimmten Kolbenhub vom Druck der Druckfeder überwunden wird, worauf das Kontaktelement die Kolbentellerfläche kontaktiert, was zur Signalanzeige verwendet werden kann. Eine besonders einfache Signalabgreifung wird in diesem Fall dann erzielt, wenn das Kontaktelement über die Druckfeder des Kolbens elektrisch mit einer Steckerbuchse verbunden wird, wobei die Druckfeder in diesem Fall natürlich gegenüber den anderen Teilen des Bremszylinders isolierend montiert werden muß. Alternativ hierzu kann die Signalabgreifung jedoch auch über eine separate Spiralfeder oder ein internes Kabel oder dergleichen erfolgen.

Aufgrund der bereits erwähnten Schwenkbewegungen des Kolbens empfiehlt es sich schließlich, das Kontaktelement auf einer parallel zur kammerinneren Fläche des Kolbentellers angeordneten Scheibe zu befestigen und als Ringkontakt oder als aus mehreren gleichmäßig am Umfang der Scheibe angeordneten Einzelkontakten auszubilden. Ferner empfiehlt es sich im Hinblick auf Korrosionsprobleme, das Kontaktelement und die kammerinneren Fläche des Kolbentellers derart mit einer elastischen Dichtung zu versehen, daß die Kontaktflächen korrosionsgeschützt sind.

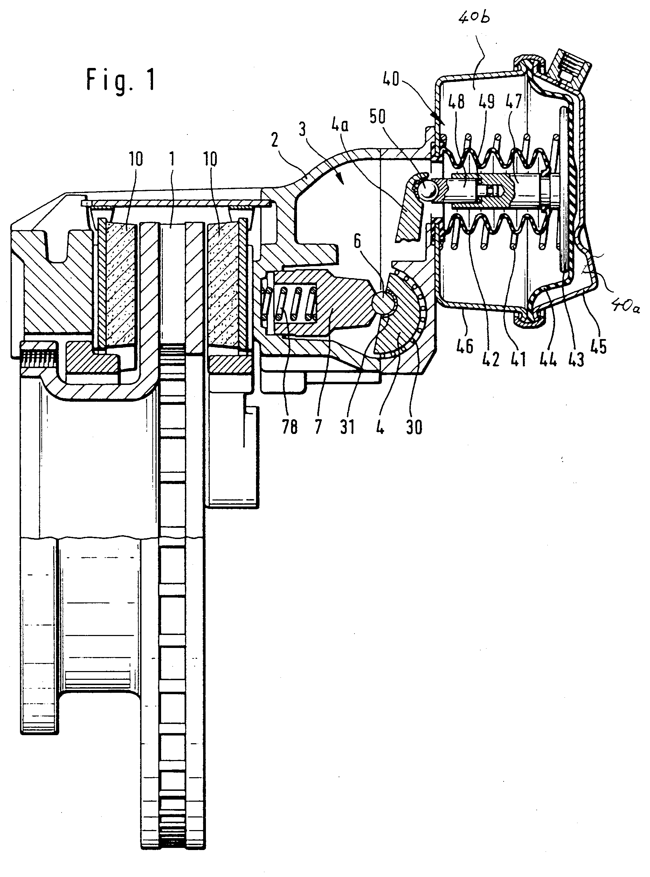

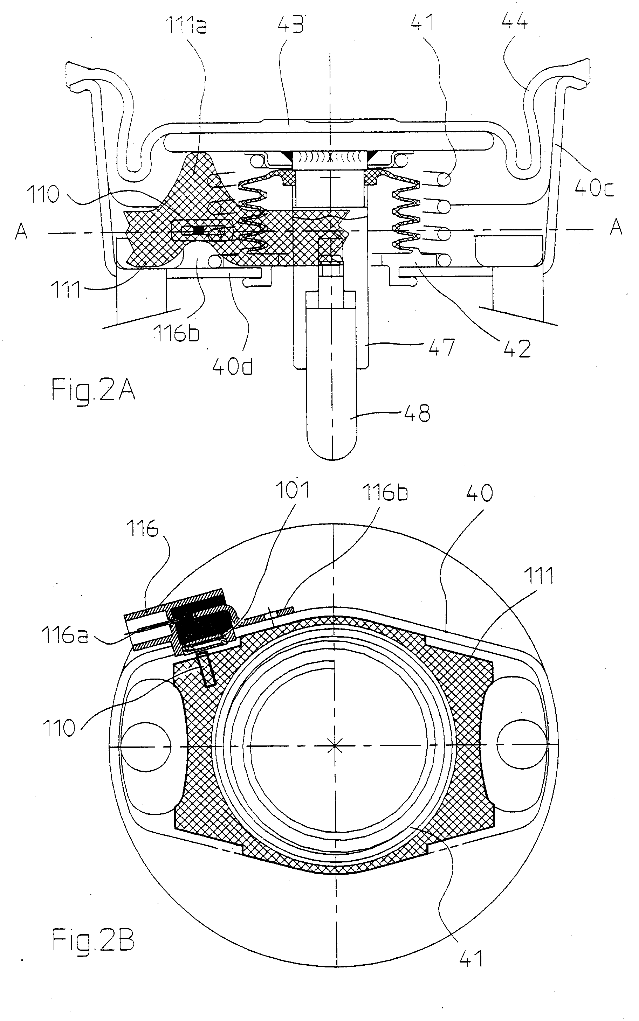

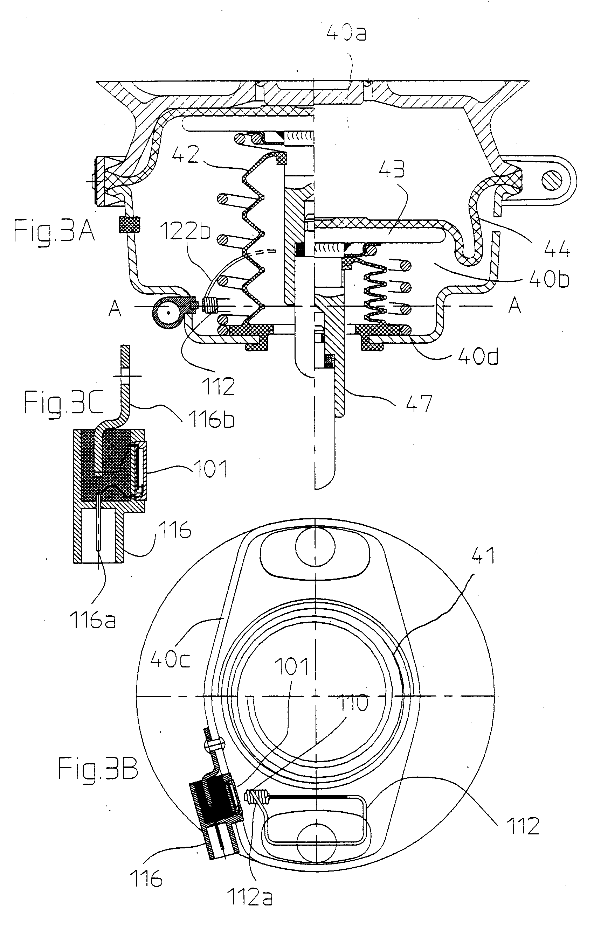

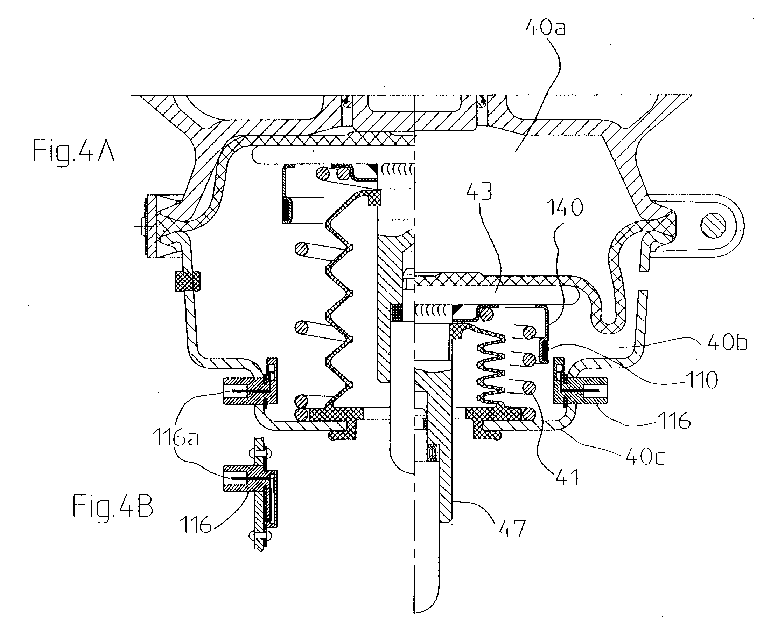

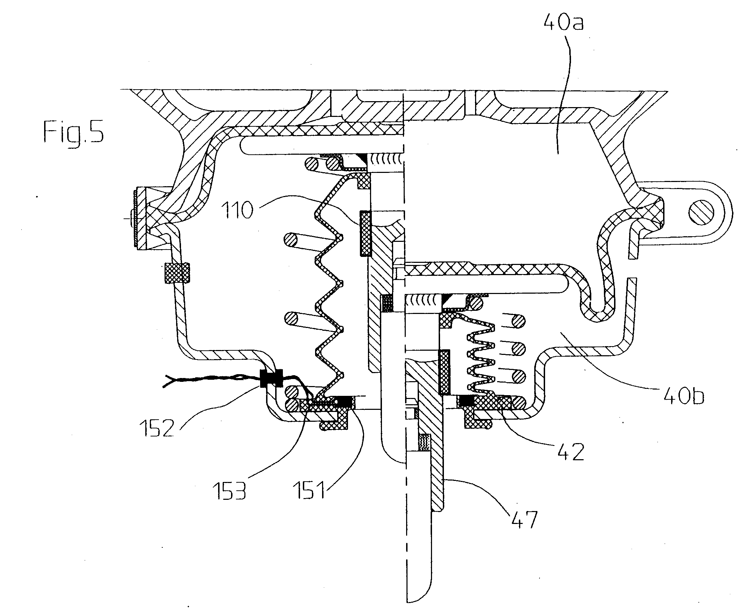

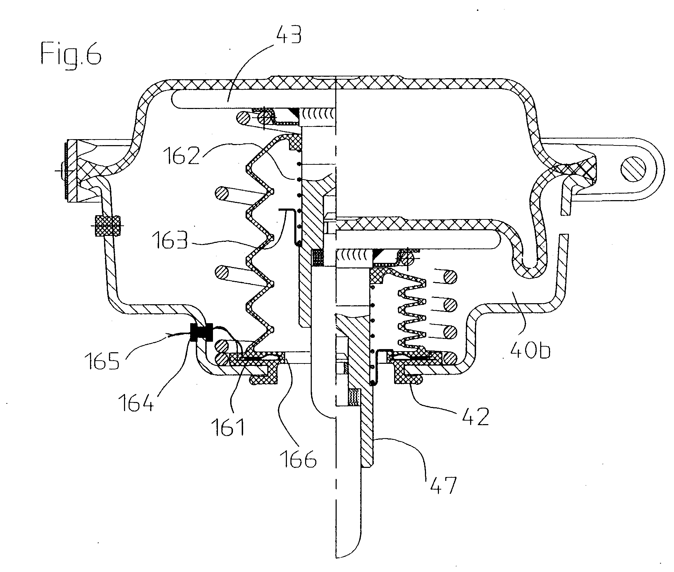

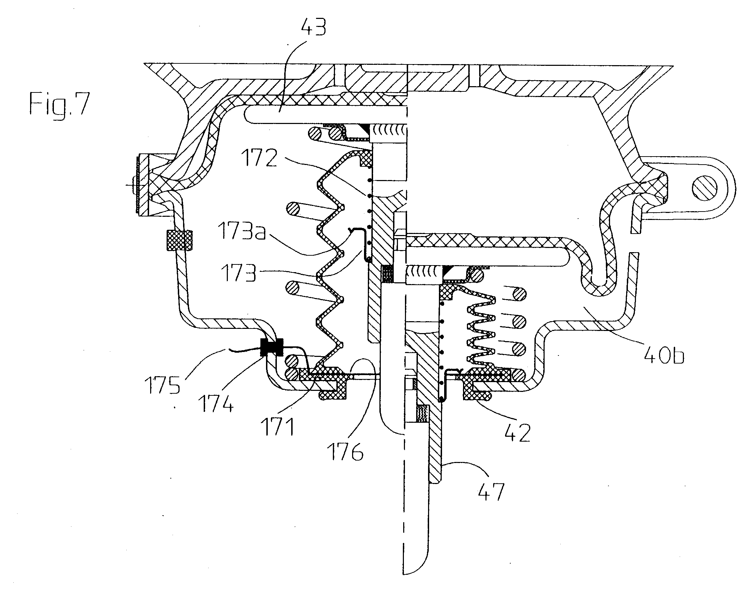

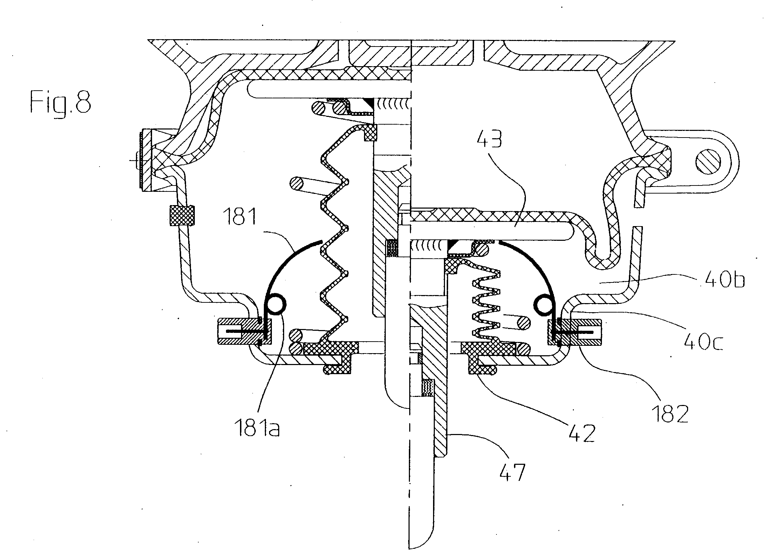

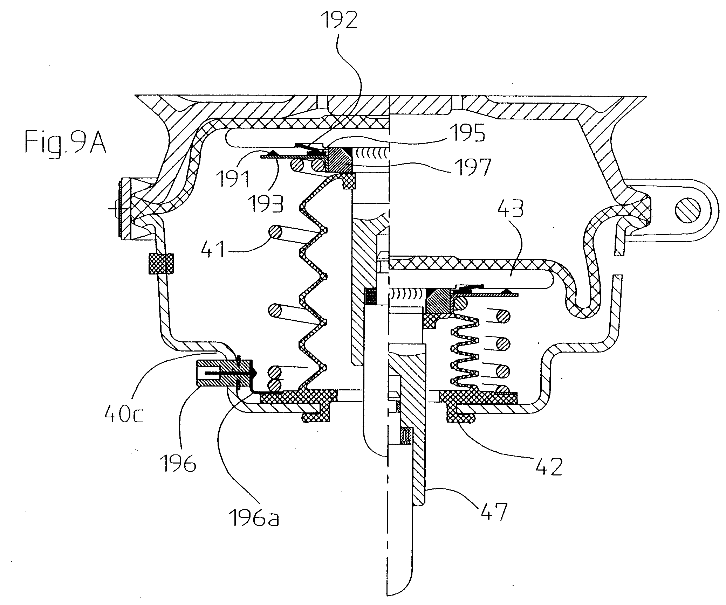

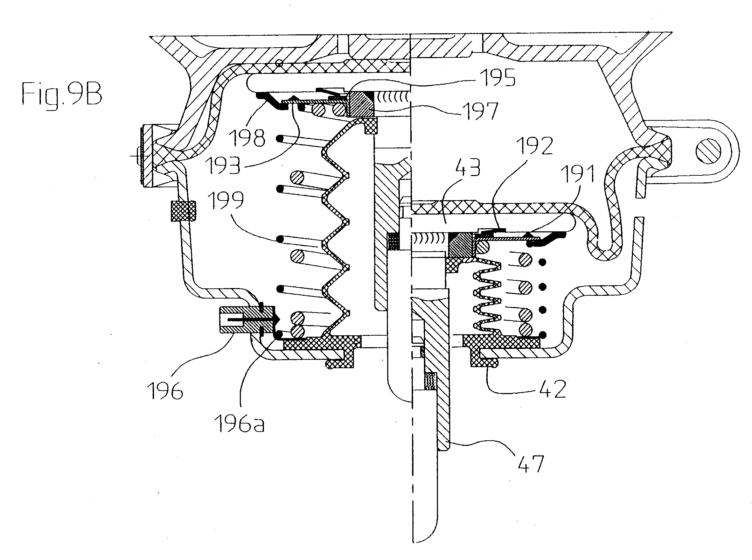

Die Erfindung wird nunmehr nachstehend anhand der Beschreibung von Ausführungsbeispielen unter Bezugnahme auf die Zeichnung näher erläutert. Es zeigen:
**Fig**.1 anhand eines Querschnitts den schematischen Aufbau eines an die Zuspannvorrichtung einer Scheibenbremse angeflanschten Bremszylinders;
**Fig**.2A und 2B in einer Querschnittsansicht bzw. einer Draufsicht eines Bremszylinders eine erste Ausführungsform der erfindungsgemäßen Überwachungseinrichtung;
**Fig**.3A und 3B in einer Querschnittsansicht bzw. einer Draufsicht eines Bremszylinders eine erste Ausführungsform der erfindungsgemäßen Überwachungseinrichtung, wobei in **Fig.**3C der Aufbau einer Steckerbuchse näher gezeigt ist;
**Fig**.4A und 5 jeweils in einer Querschnittsansicht zwei weitere Ausführungsformen einer berührungslos arbeitenden Überwachungseinrichtung, wobei in **Fig**.4B der Aufbau einer Steckerbuchse näher gezeigt ist;
**Fig**.6 in einer Querschnittsansicht ein erstes Ausführungsbeispiel einer mit einem Schalterkontakt arbeitenden Überwachungseinrichtung;
**Fig**.7 eine Variante der in **Fig**.6 gezeigten Überwachungseinrichtung;
**Fig**.8 ein zweites Ausführungsbeispiel einer mit einem Schalterkontakt arbeitenden Überwachungseinrichtung;
**Fig**.9A ein drittes Ausführungsbeispiel einer mit einem Schalterkontakt arbeitenden Überwachungseinrichtung; und
**Fig**.9B eine Variante der in **Fig**.9A gezeigten Überwachungseinrichtung.

Zum besseren Verständnis der mit der Erfindung gelösten Probleme sollen zunächst der grundsätzliche Aufbau eines gattungsgemäßen Bremszylinders sowie einer von diesem betätigten Zuspannvorrichtung für eine Scheibenbremse nähar erläutert werden. Wie bereits eingangs erwähnt wurde, kann die Lehre der Erfindung jedoch auch bei solchen Bremszylindern angewandt werden, die für andersartige Zuspannvorrichtungen vorgesehen sind. Auch kann es sich bei der Bremse ggf. selbstverständlich um eine Trommelbremse handeln.

Gemäß **Fig**.1 wird eine (innenbelüftete) Bremsscheibe 1 von einem Bremssattel 2 umfaßt. Der Bremssattel 2 ist mittels eines starren Führungslagers sowie mittels eines Ausgleichslagers in axialer Verschiebbarkeit bezüglich der Bremsscheibe 1 am Fahrzeug gelagert. Auf der in **Fig**.1 rechten Seite der Bremsscheibe 1 ist eine schematisch mit dem Bezugszeichen 3 bezeichnete Zuspannvorrichtung angeordnet. Im Bremssattel 2 ist ein im wesentlichen halbkreisförmiges Drehlager 30 vorgesehen, das die Bremsscheibenachse rechtwinklig kreuzt bzw. parallel zur Ebene der Bremsscheibe 1 verläuft und den entsprechend abgerundeten Rückenbereich eines Drehhebels 4 aufnimmt.

Zur Betätigung des Drehhebels 4 ist ein Bremszylinder 40 vorgesehen, der einen aus zwei teleskopartig ineinadergeschobenen Stangen 47 und 48 bestehenden Kolben aufweist, der über ein Kugelpfannenlager mit einem Hebelarm (Betätigungsarm) 4a des Drehhebels 4 gelenkig in Eingriff steht. Der Bremszylinder 40 besteht im wesentlichen aus einem aus zwei Gehäuseschalen 45 und 46 gebildeten Gehäuse, das durch eine flexible Membran 44 luftdicht in zwei Kammern 40a und 40b unterteilt ist, von denen die der Scheibenbremse abgewandte oder "äußere" (nachfolgend als erste Kammer bezeichnete) Kammer 40a mit einer Druckluft-Zuleitung kommuniziert. An der der "inneren" (nachfolgend als zweite Kammer bezeichneten) Kammer 40b zugewandten Seite der Membran 44 ist eine Druckplatte bzw. ein Kolbenteller 43 befestigt, an dem die innere (47) der beiden Druckstangen des Kolbens sowie eine Rückhol- oder Druckfeder 41 befestigt sind. In der Druckstange 47 ist koaxial die andere Druckstange 48 befestigt; durch diese Zweiteilung des Kolbens ist es - ggf. unter zusätzlicher Verwendung von Distanzscheiben - möglich, die Länge der Kolbens bezüglich des Drehhebels 4 exakt zu justieren. Schließlich weist die zweite Kammer 40b noch einen Faltenbalg 42 auf, so daß jedes Eindringen von Schmutz in das Innere der Zuspannvorrichtung sicher verhindert werden kann.

Wenn der Bremszylinder 40 bzw. dessen erste Kammer 40a mit Druckluft beaufschlagt wird, wird der Kolben aus seiner Ruheposition heraus zur Scheibenbremse hin bewegt, so daß der Hebelarm 4a des Drehhebels 4 von seiner in **Fig**.1 gezeigten Ruheposition nach links zur Bremsscheibe hin verschwenkt wird. Es sei angemerkt, daß die Betätigung des Drehhebels 4 selbstverständlich auch über ein längeres Bremsgestänge erfolgen kann, dessen Ende der gezeigten Druckstange 48 entspricht, so daß der Bremszylinder 40 gegebenenfalls an einem anderen Ort plaziert werden kann, falls der verfügbare Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene bewegbar ist. An ihrem der Bremsscheibe 1 zugewandten Ende weist die Traverse 7 eine Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 schiebegelagert. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Die Traverse 7 liegt über zwei (nicht erkennbare) Druckstücke an einer Bremsbacke 10 an. Zum Ausgleich des Abriebs der Bremsbacke 10 ist im Inneren einer der beiden Stellspindeln eine Nachstelleinrichtung angeordnet, die bei jeder Betätigung des Drehhebels 4 um einen bestimmten Winkelbetrag gedreht wird, wodurch ein kontinuierliches Nachstellen der Bremse gewährleistet ist. Bei Druckluftbeaufschlagung des Bremszylinders 40 wird der Hebelarm 4a gemäß **Fig**.1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 eine entsprechende Wegstrecke zur Bremsscheibe 1 hin gedrückt. Die an der Traverse 7 befestigten Druckstücke drücken folglich unter Überwindung des Lüftspiels die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in **Fig**.1 nach rechts, so daß schließlich auch die linke Bremsbacke 10 gegen die Bremsscheibe 1 gepreßt wird. Wenn die Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung vom Drehhebel 4 betätigt, wodurch das Lüftspiel auf den Sollwert gebracht wird.

Wenn die Bremsbacken weitgehend abgerieben sind, wird dies von einem nicht näher gezeigten Sensor erfaßt und dem Fahrer angezeigt, so daß ein Belagwechsel veranlaßt werden kann. Da dieser Sensor jedoch ausfallen kann und da zudem nicht sichergestellt werden kann, daß die Zuspannvorrichtung stets fehlerfrei arbeitet, ist der Bremszylinder 40 erfindungsgemäß mit einer Überwachungseinrichtung ausgerüstet, die in der Lage ist, bei einem bestimmten, den normalen Hubweg überschreitenden Kolbenhub ein entsprechendes Warnsignal auszulösen. Somit wird eine zusätzliche Sicherheitsfunktion geschaffen, die die Gefahr eines durch ein Bremsenversagen hervorgerufenen Unfalls weiter verringert. Verschiedene Ausführungsformen der erfindungsgemäßen Überwachungseinrichtung werden nachfolgend näher erläutert.

In den **Fig**.2A und 2B ist die den zweiteiligen Kolben 47, 48 enthaltende zweite Kammer 40b des Bremszylinders 40 näher gezeigt, wobei **Fig**.2A eine Querschnittsansicht ist, während **Fig**.2B eine entlang der Linie A-A der **Fig**.2A geschnittene Draufsicht zeigt. Wie aus diesen Figuren zu erkennen ist, liegt an einer der (nicht gezeigten) Zuspannvorrichtung zugewandten Vorderwand 40d ein aus einem elastisch verformbaren Material bestehendes Formteil 111 an, das beispielsweise aus Gummi, geschlossen-porigem Schaumstoff oder alternativ aus elastischem Kunststoff besteht. Insbesondere der **Fig**.2B ist entnehmbar, daß das Formteil 111 Außenkonturen aufweist, die im wesentlichen dem Verlauf der an die Vorderwand 40d angrenzenden, mit dem Bezugszeichen 40c bezeichneten Seitenwandung der zweiten Kammer 40b angepaßt sind; in der Mitte weist das Formteil 111 eine der mit dem Faltenbalg 42 abgedichteten Gehäuseöffnung angepaßte Ausnehmung auf. Aufgrund dieser Gestalt kann das Formteil auf äußerst einfache Weise im Gehäuseinneren an der Vorderwand 40d montiert und beispielsweise durch Klebstoff befestigt werden. Darüber hinaus ist aufgrund der Kontur der Seitenwandung 40c sichergestellt, daß das Formteil 111 eine genau definierte Lage einnimmt.

An einer seitlichen, aus der Draufsicht der **Fig**.2B entnehmbaren Randlage des Formteils 111 ist eine längliche Ausnehmung im Formteil 111 vorgesehen, in der ein stabförmiger Permanentmagnet 110 sitzt. Dieser kann durch Kleben in der Ausnehmung befestigt sein oder aber durch einen Preßsitz gehalten werden, was aufgrund der Elastizität des Formteils 111 die einfachste und billigste Lösung darstellt. Alternativ kann der Permanentmagnet 110 auch bei der Herstellung des Formteils 111 mit diesem vergossen werden. Aus der **Fig**.2A ist ersichtlich, daß oberhalb der Ausnehmung des Formteils 111 bzw. oberhalb des Permanentmagneten 110 ein kuppenförmiger Vorsprung 111a ausgebildet ist, während an der Unterseite eine korrespondierende Ausbuchtung 111b eingeformt ist. Die Ausnehmung des Permanentmagneten 110 ist knapp oberhalb der Ausbuchtung 111b angeordnet, wie ebenfalls aus **Fig**.2A ersichtlich ist.

An der dem Permanentmagneten 110 gegenüberliegenden Stelle der Seitenwandung 40c ist eine Steckerbuchse 116 mittels eines laschenförmigen Befestigungselements 116b beispielsweise durch Verschrauben, Vernieten oder Schweißen befestigt. Ein Reed-Kontakt 101 ist an einem seitlichen Bereich des Gehäuses der Steckerbuchse 116 derart eingebaut, daß eine integrale Baueinheit aus Steckerbuchse 116 und Reed-Kontakt 101 gebildet wird. In der Seitenwandung 40c ist eine längliche Ausnehmung oder Öffnung angebracht, in die der seitlich vom Gehäuse der Steckerbuchse 116 hervorragende Reed-Kontakt 101 sitzt, wenn die Steckerbuchse 116 an der Seitenwandung 40c befestigt ist. Durch diesen Sitz des Reed-Kontaktes 101 wird darüber hinaus der Vorteil erzielt, daß die Steckerbuchse 116 sicher in der gewünschten Lage arretiert wird, so daß die Befestigung mit nur einem Befestigungselement völlig ausreichend ist.

Wie aus **Fig**.2A ersichtlich ist, ist die längliche Öffnung so angeordnet, daß der Permanentmagnet 110 den beiden inneren Blattfedern des Reed-Kontaktes 101 genau gegenüberliegt, und zwar unter einem vergleichsweise geringem Abstand. Das Magnetfeld des Permanentmagneten kann daher auf die beiden Blattfedern des Reed-Kontaktes 101 mit maximaler Feldstärke einwirken, so daß der Reed-Kontakt geschlossen bleibt. Da eine der beiden Blattfedern des Reed-Kontaktes 101 über ein inneres Anschlußkabel mit dem laschenförmigen Befestigungselement 116b verbunden ist und somit an Massepotential liegt, befindet sich auch ein einpoliger Anschlußstift 116a der Steckerbuchse 116 bei dieser Position des Permanentmagneten auf Massepotential. Der Signalpegel "Masse" kann daher von einer Auswertungsschaltung für eine dahingehende Anzeige ausgewertet werden, daß der vorbestimmte Maximalhub des Kolbens noch nicht überschritten ist, d.h. daß kein Fehler im Bremssystem vorliegt.

Wenn der Kolben aufgrund eines Defekts in der Zuspannvorrichtung oder aufgrund verschlissener Bremsbeläge den zulässigen Maximalhub überschreitet, berührt der Kolbenteller 43 den oberen Rand des kuppenförmigen Vorsprungs 111a und drückt diesen in axialer Richtung nach unten zur Vorderwand 40d; der genau unterhalb des Vorsprungs 111a befindliche Permanentmagnet 110 wird daher ebenfalls nach unten bewegt, da das Formteil 111 an dieser Stelle die Ausbuchtung 111b aufweist und somit in dieser Richtung bevorzugt nachgibt. Das wirksame Magnetfeld des Permanentmagneten 110 bewegt sich daher aus den Erfassungsbereich des Reed-Kontaktes 101 heraus, so daß dessen Blattfedern voneinander gelöst werden. Der mit der Auswertungsschaltung verbundene Anschlußstift 116a liegt daher nicht länger an Masse, was von der Auswertungsschaltung als Fehlerzustand aüsgewertet und ggf. angezeigt werden kann.

Bei der vorstehend beschriebenen Ausführungsform kann derjenige Maximalhub, bei dem ein Fehlersignal erzeugt werden soll, sehr leicht durch geeignete Dimensionierung des Vorsprungs 111a eingestellt werden. Auch durch geeignete Wahl der Dicke des Formteils 111 kann der zu erfassende Bereich des Maximalhubs beeinflußt werden.

Anstelle eines an die Kontur der zweiten Kammer angepaßten Formteils 111, wie es vorstehend beschrieben wurde und in den Figuren gezeigt ist, kann vereinfachend auch ein klotzförmiges elastisches Teil aus Schaumgummi oder dergleichen an dem dem Reed-Kontakt 101 gegenüberliegenden Bereich der Vorderwand 40d befestigt werden, wobei der Permanentmagnet in gleicher Weise wie beim Formteil 111 gegenüber den Blattfedern des Reed-Kontaktes 101 angeordnet und befestigt wird. Die bei Erreichen des eingestellten Maximalhubs vom Kolbenteller 43 herbeigeführte Verformung bzw. Quetschung des klotzförmigen elastischen Teils führt dann ebenfalls zu einer örtlichen Verstellung des Permanentmagneten 110, so daß dessen Magnetfeld nicht mehr im Erfassungsbereich des Reed-Kontaktes 101 liegt. Die geringeren Herstellungskosten eines derart geformten elastischen Teils werden jedoch mit dem Nachteil einer schwierigeren Justage bei seinem Einbau erkauft.

In den **Fig**.3A und 3B ist eine Variante der vorstehend beschriebenen Ausführungsform gezeigt, bei der als elastisches Element eine Formfeder 112 vorgesehen ist, die an der Vorderwand 40d der zweiten Kammer 40b befestigt ist. **Fig**.3A ist wiederum eine Querschnittsansicht, wobei die linke Hälfte den drucklosen Zustand zeigt, während die rechte Hälfte einen Zustand zeigt, bei dem sich der Kolben in der Nähe des Maximalhubs befindet. **Fig**.3B zeigt demgegenüber eine entlang der Linie A-A der **Fig**.3A geschnittene Draufsicht.

Wie insbesondere aus **Fig**.3B zu erkennen ist, weist die Formfeder 112 einen den Permanentmagneten 110 umschlingenden Abschnitt 112a auf, durch den dieser vibrationsfest gehalten wird. Ferner weist die Formfeder 112 einen Federbügel-Abschnitt 112b auf, der derart in Richtung zum Kolbenteller 43 hin gebogen ist, daß ihn dieser bei dem vorbestimmten Maximalhub verschwenkt und damit den Permanentmagneten aus dem Erfassungsbereich des Reed-Kontaktes 101 herausbewegt. Die grundsätzliche Funktionsweise dieser Ausführungsform der Erfindung entspricht der des Ausführungsbeispiels der **Fig**.2: Solange der Bremszylinder normale Arbeitshübe ausführt, betätigt der Kolbenteller 43 den Federbügel-Abschnitt 112b nicht, so daß der Permanentmagnet 110 dem in Steckerbuchse 116 integrierten Reed-Kontakt 101 genau gegenüberliegt; dessen Blattfedern berühren sich daher, so daß als Signal für diesen Normalzustand Massepegel geliefert wird. Sobald der Kolben jedoch einen übermäßigen Hub ausführt, wird der Federbügel-Abschnitt 112b vom Kolbenteller 43 in Verschieberichtung des Kolbens herabgedrückt, so daß sich der Permanentmagnet 110 gleichfalls in dieser Richtung bewegt und dadurch den Erfassungsbereich des Reed-Kontaktes 101 verläßt, was zu einem Abfall der Blattfedern und damit zu einer Alarmanzeige führt.

Auch bei dieser Ausführungsform der Erfindung läßt sich der zu einem Alarmsignal führende Maximalhub des Kolbens sehr einfach einstellen, indem die Länge und/oder Neigung des Federbügel-Abschnitts 112b geeignet gewählt wird.

In **Fig**.3C ist der genaue Aufbau der Steckerbuchse 116 und des in dieser als integrierter Bestandteil eingebauten Reed-Kontaktes 101 näher gezeigt. Es sei an dieser Stelle darauf hingewiesen, daß der gezeigte einpolige Aufbau der Steckerbuchse bei Bedarf selbstverständlich auch durch eine zweipolige Ausführung ersetzt werden kann. In diesem Fall ist auch die zweite Blattfeder des Reed-Kontaktes 101 mit einem Anschlußstift verbunden, wobei sich das Alarmsignal als Unterbrechung der beiden Anschlußstifte äußert.

Bei den beiden vorstehend beschriebenen Ausführungsformen der Erfindung wird eine sogenannte "Fail-safe-Anordnung" geschaffen, bei der auch ein Defekt des Reed-Kontaktes erkannt wird, da in diesem Fall auch dann ein Alarmsignal erzeugt wird, wenn eine der Blattfedern des Reed-Kontaktes 101 bricht oder wenn aus sonstigen Gründen kein Kontakt mehr herbeigeführt wird.

Wenn hingegen keine "Fail-safe-Anordnung" benötigt wird, kann zur Verschiebung des Permanentmagneten 110 die in der **Fig**.4A gezeigte Variante der vorstehenden Ausführungsbeispiele verwendet werden. Wie bereits **Fig**.3A zeigt auch **Fig**.4A eine Querschnittsansicht, bei der die linke Hälfte den drucklosen Zustand zeigt, während die rechte Hälfte einen Zustand zeigt, bei dem sich der Kolben in der Nähe seines Maximalhubs befindet.

Gemäß der Darstellung in **Fig**.4A ist am Kolbenteller 43 ein als Ringmagnet ausgebildeter Permanentmagnet 110 mittels eines topfartig geformten Montagebügels 140 derart befestigt, daß er die Druckfeder 41 konzentrisch umgibt und mit einem vorbestimmten Abstand zur seitlichen Gehäusewand 40c geführt wird. In der seitlichen Gehäusewand 40c sind diametral gegenüberliegend zwei Steckerbuchsen 116 mit innenliegend integriertem Reed-Kontakt 101 in geeignet geformten Ausnehmungen befestigt. Der Aufbau dieser Steckerbuchsen 116 und des integrierten Reed-Kontaktes 101 ist in der **Fig**.4B in näheren Einzelheiten gezeigt; es ist ersichtlich, daß diese Steckerbuchse weitgehend der der vorangehenden Ausführungsbeispiele entspricht.

Der Abstand des Ringmagneten 110 zum Kolbenteller 43 wird durch geeignete Länge des Montagebügels 140 derart eingestellt, daß der Ringmagnet 110 bei Erreichen des vorbestimmten Maximalhubs in den Erfassungsbereich des Reed-Kontaktes gerät, wie dies in der rechten Hälfte der **Fig**.4A angedeutet ist. Die inneren Blattfedern des Reed-Kontaktes 101 werden also erst im Falle der anzuzeigenden Hubüberschreitung geschlossen.

Der Kolben des Bremszylinders ist, wie bereits eingangs erwähnt wurde, aufgrund seiner Befestigung an der Membran seitlichen Schwankungen ausgesetzt. Jedoch wird auch bei einer dadurch ggf. hervorgerufenen Schieflage des Kolbens aufgrund der Ausbildung des Permanentmagneten 110 als Ringmagnet sowie infolge der Verwendung von zwei Reed-Kontakten 101 stets eine zuverlässige Signalerzeugung gewährleistet. Die Anschlußstifte 116a der beiden Reed-Kontakte 101 werden durch nicht gezeigte Leitungen oder ggf. erst in der Auswertungsschaltung elektrisch parallelgeschaltet; falls die auftretenden Nickbewegungen des Kolbens sehr stark sind, kann in Erwägung gezogen werden, mehr als zwei Reed-Kontakte zu verwenden, die gleichmäßig am Umfang der Seitenwand 40c verteilt werden.

In der in **Fig**.5 gezeigten Ausführungsform der erfindungsgemäßen Überwachungseinrichtung ist als magnetisches Fühlerelement eine Induktionsspule 151 vorgesehen, die in demjenigen Bereich des Faltenbalgs 42 einvulkanisiert ist, an dem dieser an der Gehäuseöffnung befestigt ist, wie aus **Fig**.5 unmittelbar ersichtlich ist. An der zylinderinneren Stange 47 des Kolbens ist ein Permanentmagnet in Form eines Ringmagneten 110 befestigt, wobei die axiale Lage dieses Ringmagneten so gewählt ist, daß der Ringmagnet bei Erreichen des zu erfassenden Maximalhubs durch den Befestigungsbereich des Faltenbalgs 42 hindurchtritt (siehe rechte Hälfte der **Fig**.5), wodurch sein Magnetfeld eine entsprechende Induktion in der dort angeordneten Spule 151 hervorruft. Dieses induktiv erzeugte Signal kann in der (nicht gezeigten) Auswertungsschaltung erfaßt und ggf. nach geeigneter Speicherung in ein Anzeigesignal umgesetzt werden.

Die beiden Enden der Spule 151 sind an zwei Signalleitungen 153 angeschlossen, die über eine Gummitülle 152 oder dergleichen nach Außen geführt sind und die Spule 151 mit der Auswertungsschaltung verbinden. Der Ringmagnet 110 kann u.U. auch durch einen einzelnen oder mehrere am Umfang der Stange 47 des Kolbens befestigte Einzelmagnete ersetzt werden.

Bei den vorstehend beschriebenen Ausführungsbeispielen wurde der zu überwachende Maximalhub des Kolbens mittels eines magnetischen Fühlerelements in Form des Reed-Kontaktes 101 bzw. der Induktionsspule 151 erfaßt. Gemäß einem hierzu unabhängigen Gesichtspunkt der Erfindung kann als Fühlereinrichtung jedoch auch ein im Gehäuseinneren angeordneter Schalterkontakt verwendet werden, der vom Kolben oder von dessen Kolbenteller bei dem vorbestimmten Kolbenhub betätigt wird. Nachstehend werden bevorzugte Ausführungsformen derartiger Schaltfühler näher erläutert.

Bei der in **Fig**.6 gezeigten Ausführungsform ist als Schalterkontakt ein zwei übereinanderliegende Kontaktflächen aufweisenden Ringkontakt oder -schalter 161 vorgesehen, der in ähnlicher Weise wie die Induktionsspule im Faltenbalg 42 an dessen Befestigungsbereich an der Gehäuseöffnung einvulkanisiert ist. Zwei Anschlußleitungen 165 des Ringkontakts 161 sind über eine Gummitülle 164 nach Außen geführt und an die Auswertungsschaltung angeschlossen. An der zylinderinneren Stange 47 des Kolbens ist ein topfartig geformtes Betätigungselement 163 verschiebbar gelagert und von einer Druckfeder 162 in Druckrichtung des Kolbens vorgespannt. Wenn sich der Kolben seinem Maximalhub nähert, berührt das Betätigungselement 163 einen mit 166 bezeichneten Bereich des Faltenbalgs 42, unterhalb dem der Ringkontakt 161 liegt (siehe rechte Hälfte der **Fig**.6); bei noch weiterer Hubvergrößerung wird der Kontakt durch den Druck des Betätigungselements 163 durchgeschaltet, wobei die Druckfeder 162 jegliche Beschädigung des Bremszylinders oder des Faltenbalgs 42 samt Ringkontakt verhindert.

Durch die vollständige Kapselung des Ringkontaktes 161 wird eine hohe Betriebszuverlässigkeit erreicht, wobei Korrosionseinflüsse oder dergleichen völlig ausgeschaltet werden können. Die Herstellung des Ringschalters im Rahmen der Herstellung des Faltenbalgs 42 ist zudem nur mit geringen Zusatzkosten verbunden. Anstelle der gezeigten zweipoligen Ausführung kann auch eine einpolige Lösung vorgesehen werden, bei der eine der beiden Kontaktflächen des Ringkontaktes 161 mit Masse verbunden ist. In diesem Fall wird nur eine Zuleitung zur Auswertungsschaltung benötigt.

In **Fig**.7 ist eine Variante des vorstehenden Ausführungsbeispiels gezeigt, bei der ein Ringkontakt 171 vorgesehen ist, der nur eine ringförmige Kontaktfläche aufweist, die an dem Befestigungsbereich des Faltenbalgs 42 einvulkanisiert ist und dort einen freiliegenden Kontaktbereich 176 aufweist. An der zylinderinneren Stange 47 des Kolbens ist wiederum ein topfartig geformtes Betätigungselement 173 verschiebbar gelagert, das von einer Druckfeder 172 in Druckrichtung des Kolbens vorgespannt ist und eine zu dem Kontaktbereich 176 hin gerichtete Kontaktspitze 173a aufweist, die aufgrund ihrer Befestigung an Massepotential anliegt. Wenn sich der Kolben seinem Maximalhub nähert, berührt die Kontaktspitze 173a des Betätigungselements 173 den Kontaktbereich 176 (siehe rechte Hälfte der **Fig**.7), wodurch der Ringkontakt 171 an Massepotential angelegt wird, was über eine durch eine Gummitülle 174 hindurchgeführte Leitung 175 an die Auswertungsschaltung weitergegeben wird. Eine Beschädigung des Kontaktbereichs 176 wird durch die Druckfeder 172 verhindert.

Die vorstehende Ausführungsform zeichnet sich zwar durch noch geringere Herstellungskosten als die der **Fig**.6 aus, jedoch wird dies mit dem Nachteil einer gewissen Korrosionsanfälligkeit erkauft, was jedoch insofern weniger nachteilig ist, als der Kontaktbereich 176 über den Faltenbalg abgedichtet ist und der angrenzende Raum der Zuspannvorichtung in der Regel ebenfalls abgedichtet ist. Eine zweipolige Lösung kann mit dieser Ausführungsform nicht realisiert werden.

Eine besonders einfache und entsprechend billige Variante des erfindungsgemäßen Schalterkontakts ist in **Fig**.8 gezeigt: Gemäß dieser Ausführungsform ist an Seitenwandung 40c der zweiten Kammer 40b eine Steckerbuchse 182 befestigt, an deren zylinderinneren Ende ein Federelement 181 befestigt ist, wobei durch die Steckerbuchse 182 gleichzeitig eine elektrische Isolation gegenüber dem Bremszylindergehäuse geschaffen wird. Wie aus der **Fig**.8 unschwer zu erkennen ist, weist das Federelement 181 eine Schleife 181a auf und verläuft in einem federnd nachgebenden Bogen zum Kolbenteller 43 hin. Wenn der Kolben den vorbestimmten Maximalhub erreicht, berührt der Kolbenteller 43 gemäß der Darstellung in der rechten Hälfte der **Fig**.8 die Spitze des Federelements 181, wobei das Federelement 181 bei noch weiterer Bewegung des Kolbens federnd nachgibt. Sobald der Kolbenteller 43 die Spitze des Federelements 181 berührt, wird das Massepotential über den Anschlußstift der Steckerbuchse 182 an die Auswertungsschaltung weitergeleitet und dort als Fehlersignal umgesetzt.

Bei der vorliegenden Ausführungsform ist es ggf. möglich, mehr als ein Federelement 181 vorzusehen, um dadurch auch bei den erwähnten Kippbewegungen des Kolbens eine definierte Signalerzeugung zu gewährleisten. Obgleich die Befestigung des Federelements 181 mittels der Steckerbuchse 182 sehr einfach zu realisieren ist und darüber hinaus eine gute Justage des Federelements 181 gewährleistet, kann gleichwohl daran gedacht werden, die Befestigung des Federelements 181 unabhängig von der Steckerbuchse vorzunehmen.

Als nachteilig bei dieser an sich sehr preisgünstigen Ausführungsform der Erfindung ist die Korrosionsanfälligkeit anzusehen sowie die Tatsache, daß nur eine einpolige Ausführung möglich ist, so daß die signalmäßig sicherere zweipolige Ausführung nicht in Frage kommt.

In **Fig**.9A ist eine weitere Ausführungsform der Erfindung gezeigt, bei der in geringem Abstand zur kammerinneren Fläche des Kolbentellers 43 ein Kontaktelement 191 vorgesehen ist, das auf einer parallel zur kammerinneren Fläche des Kolbentellers angeordneten Scheibe 193 befestigt ist und als Ringkontakt geformt ist oder aus mehreren gleichmäßig am Umfang der Scheibe 193 angeordneten Einzelkontakten besteht. Die Scheibe 193 wird von einer Druckfeder 192 unter eine Druckspannung gesetzt, die dem von der Druckfeder 41 des Kolbens ausgeübten Druck entgegengerichtet und so eingestellt ist, daß sie bei dem vorbestimmten maximalen Kolbenhub vom Druck der Druckfeder 41 überwunden wird, worauf das Kontaktelement 91 die innere Kolbentellerfläche kontaktiert (siehe rechte Hälfte der **Fig**.9A), was zur Signalanzeige verwendet werden kann.

Aus **Fig**.9A ist ferner zu erkennen, daß die Druckfeder 192 auf einem isolierenden Ring 195 aufliegt; ferner ist die Druckfeder 41 des Kolbens über einen isolierenden Abstandshalter 197 sowie durch den Befestigungsbereich des Faltenbalgs 42 gegenüber den anderen Teilen des Bremszylinders elektrisch isoliert. Der Anschlußstift einer in der Seitenwandung 40c angebrachten Steckerbuchse 196 steht über ein Winkelstück 196a elektrisch mit dem unteren Ende der Druckfeder 41 in Verbindung, während das andere Ende der Druckfeder 41 an der das Kontaktelement 91 tragenden Scheibe 193 anliegt. Mit dieser Anordnung wird also erreicht, daß das Kontaktelement 191 über die Druckfeder 41 mit dem Anschlußstift der Steckerbuchse 196 elektrisch verbunden und gleichzeitig gegenüber dem Massepotential des Bremszylinders isoliert ist. Erst wenn das Kontaktelement 191 bei Erreichen des Maximalhubs den Kolbenteller 43 berührt, wird das Kontaktelement 191 an Massepotential gelegt, was von der Auswertungsschaltung als Fehlersignal gewertet wird.

In **Fig**.9B ist schließlich eine Variante der in **Fig**.9A gezeigten Ausführungsform gezeigt, die sich in zwei Details von dieser unterscheidet: zwischen der kammerinneren Fläche der Scheibe 192 und dem Kolbenteller 43 ist eine Abdichtung in Form einer Dichtlippe 198 angeordnet; diese Dichtlippe 198 bewirkt eine vollkommene Kapselung des Kontaktbereichs zwischen dem Kolbenteller 43 und dem Kontaktelement 191, so daß eine korrosionsunempfindliche Schalteinheit geschaffen wird. Zum anderen ist das Kontaktelement 191 über eine den Kolben umgebende Spiralfeder 199 elektrisch mit der Steckerbuchse 196 verbunden, so daß auch dann eine gute Signalübertragung gewährleistet ist, wenn die Druckfeder 41 des Kolbens mit einem Korrosionsschutz versehen ist. Gegebenenfalls kann die Signalübertragung jedoch auch mit einem im Inneren des Bremszylinders geeignet verlegten Kabel erfolgen.

Bezüglich noch Weiterer, nicht näher erläuterter Merkmale und Wirkungen der Erfindung wird ausdrücklich auf die Offenbarung der Figuren verwiesen.

## Patentansprüche

1. Einrichtung zur Überwachung des Kolbenhubs eines pneumatisch betätigbaren Bremszylinders (40), dessen Gehäuse (45, 46) von einer flexiblen Membran (44) luftdicht in zwei Kammern (40a, 40b) unterteilt ist, wobei die erste Kammer (40a) mit einer Druckluft-Zuleitung in Verbindung steht und wobei in der zweiten Kammer (40b) ein Kolben (47, 48) geführt ist, der über einen von einer Druckfeder (41) vorgespannten Kolbenteller (43) an der Membran (44) anliegt und eine mittige Gehäuseöffnung durchdringt,
*gekennzeichnet durch*
eine Fühlereinrichtung, welche die Bewegung des Kolbens (47, 48) im Inneren der zweiten Kammer (40b) erfaßt und bei einem vorbestimmten Kolbenhub ein Signal erzeugt.

2. Überwachungseinrichtung nach Anspruch 1, *dadurch gekennzeichnet*, daß die Fühlereinrichtung aus einem magnetischen Fühlerelement (101; 151) gebildet ist, das auf das Magnetfeld eines vom Kolben (47, 48) bewegbaren Permanentmagneten (110) anspricht.

3. Überwachungseinrichtung nach Anspruch 2, *dadurch gekennzeichnet*, *daß* das magnetische Fühlerelement ein Reed-Kontakt (101) ist.

4. Überwachungseinrichtung nach Anspruch 3, *dadurch gekennzeichnet*, *daß* der Reed-Kontakt (101) im normalen Arbeits-Hubbereich des Kolbens (47, 48) ständig im Magnetfeld des Permanentmagneten (110) liegt und daß der Kolben (47, 48) den Permanentmagneten (110) erst bei einem vorbestimmten Maximalhub aus dem Erfassungsbereich des Reed-Kontaktes (101) herausbewegt.

5. Überwachungseinrichtung nach Anspruch 4, *dadurch gekennzeichnet*, *daß* der Permanentmagnet (110) an einem elastischen Element (111; 112) sitzt, dessen Relativlage zum Reed-Kontakt (101) durch eine vom Kolben (47, 48) herbeigeführte elastische Verformung änderbar ist.

6. Überwachungseinrichtung nach Anspruch 5, *dadurch gekennzeichnet*, *daß* als elastisches Element ein aus einem elastisch verformbaren Material bestehendes Formteil (111) vorgesehen ist, das an der die Gehäuseöffnung aufweisenden Vorderwand (40d) der zweiten Kammer (40b) befestigt ist. (Fig.2A, 2B)

7. Überwachungseinrichtung nach Anspruch 6, *dadurch gekennzeichnet*, *daß* das Formteil (111) mit einer der Gehäuseöffnung angepaßten Ausnehmung versehen ist und Außenkonturen aufweist, die im wesentlichen dem Verlauf der an die genannte Vorderwand angrenzenden Seitenwandung der zweiten Kammer (40b) angepaßt sind, wobei an einer dem Reed-Kontakt (101) gegenüberliegenden Stelle des Formteils (111) eine Ausnehmung zur Aufnahme des Permanentmagneten (110) ausgebildet ist, oberhalb der ein Vorsprung (111b) angeformt ist, den der Kolbenteller (43) bei dem vorbestimmten Maximalhub in Axialrichtung niederdrückt.

8. Überwachungseinrichtung nach Anspruch 6 oder 7, *dadurch gekennzeichnet, daß* das Formteil (111) aus Gummi, geschlossen-porigem Schaumstoff oder aus elastischem Kunststoff besteht.

9. Überwachungseinrichtung nach Anspruch 5, *dadurch gekennzeichnet*, *daß* als elastisches Element eine Formfeder (112) vorgesehen ist, die an der die Gehäuseöffnung aufweisenden Vorderwand der zweiten Kammer (40b) befestigt ist und einen den Permanentmagneten (110) umschlingenden Abschnitt (112a) sowie einen Federbügel-Abschnitt (112b) aufweist, der derart in Richtung zum Kolbenteller (43) hin gebogen ist, daß ihn dieser bei dem vorbestimmten Maximalhub verschwenkt und damit den Permanentmagneten (110) aus dem Erfassungsbereich des Reed-Kontaktes (101) herausbewegt. (Fig.3A, 3B)

10. Überwachungseinrichtung nach Anspruch 3, *dadurch gekennzeichnet*, *daß* der Permanentmagnet (110) am Kolben (47, 48) oder an dessen Kolbenteller (43) derart befestigt ist, daß er bei Erreichen des vorbestimmten Maximalhubs in den Erfassungsbereich des Reed-Kontaktes (101) gerät. (Fig.4A, 4B)

11. Überwachungseinrichtung nach Anspruch 10, *dadurch gekennzeichnet*, *daß* der Permanentmagnet als Ringmagnet (110) ausgebildet ist, der an einem am Kolbenteller (43) befestigten Montagebügel (140) sitzt, wobei zwei Reed-Kontakte (101) vorgesehen sind, die einander in bezug zur Gehäuseöffnung diametral gegenüberliegen.

12. Überwachungseinrichtung nach einem der Ansprüche 3 bis 11, *dadurch gekennzeichnet*, *daß* der Reed-Kontakt (101) als integrale Baueinheit mit einer Steckerbuchse (116) ausgebildet ist, die an der Seitenwandung der zweiten Kammer (40b) befestigt ist, wobei in der Seitenwandung eine Öffnung ausgebildet ist, über die das Magnetfeld des Permanentmagneten (110) auf den Reed-Kontakt (101) einwirken kann.

13. Überwachungseinrichtung nach Anspruch 12, *dadurch gekennzeichnet*, *daß* die Steckerbuchse (116) einen einpoligen Anschlußstift (116a) aufweist, der an die erste Blattfeder des Reed-Kontaktes (101) angeschlossen ist, wobei die zweite Blattfeder des Reed-Kontaktes (101) elektrisch mit einem Befestigungselement (116b) der Steckerbuchse (116) verbunden ist, die über das Gehäuse Massekontakt herstellt.

14. Überwachungseinrichtung nach Anspruch 2, *dadurch gekennzeichnet*, *daß* das magnetische Fühlerelement eine Induktionsspule (151) ist.

15. Überwachungseinrichtung nach Anspruch 14, *dadurch gekennzeichnet*, *daß* die Induktionsspule (151) in den Faltenbalg (42) einvulkanisiert ist und daß der Permanentmagnet (110) am Kolben (47, 48) befestigt ist. (Fig.5)

16. Überwachungseinrichtung nach Anspruch 15, *dadurch gekennzeichnet*, *daß* die Induktionsspule (151) in demjenigen Bereich des Faltenbalgs (42) einvulkanisiert ist, an dem dieser an der Gehäuseöffnung befestigt ist.

17. Überwachungseinrichtung nach Anspruch 1, *dadurch gekennzeichnet*, *daß* die Fühlereinrichtung ein im Gehäuseinneren angeordneter Schalterkontakt (161; 171; 181; 191) ist, der vom Kolben (47, 48) oder von dessen Kolbenteller (43) bei dem vorbestimmten Kolbenhub betätigbar ist.

18. Überwachungseinrichtung nach Anspruch 17 für einen Bremszylinder, bei dem die Gehäuseöffnung mittels eines am Kolben (47, 48) anliegenden Faltenbalgs (42) gegenüber dem Inneren der zweiten Kammer (40b) abgedichtet ist, *dadurch gekennzeichnet*, *daß* der Schalterkontakt ein im Faltenbalg (42) an dessen Befestigungsbereich an der Gehäuseöffnung zumindest teilweise einvulkanisierter Ringkontakt (161; 171) ist, der von einem am Kolben (47, 48) geführten, mit einer Druckfeder (162; 172) vorgespannten, topfartig geformten Betätigungselement (163; 173) betätigbar ist.

19. Überwachungseinrichtung nach Anspruch 18, *dadurch gekennzeichnet*, *daß* der Ringkontakt als ein zwei übereinanderliegende Kontaktflächen aufweisender Ringschalter (161) ausgebildet ist, der vollständig im Befestigungsbereich des Faltenbalgs (42) einvulkanisiert ist, wobei das Betätigungselement (163) die beiden Kontaktflächen durch Druckausübung auf den Befestigungsbereich des Faltenbalgs (42) schließt. (Fig.6)

20. Überwachungseinrichtung nach Anspruch 18, *dadurch gekennzeichnet*, *daß* der Ringkontakt (171) eine ringförmige Kontaktfläche aufweist, die an dem Befestigungsbereich des Faltenbalgs (42) freiliegt und bei dem vorbestimmten Kolbenhub durch das eine Kontaktspitze (173a) aufweisende Betätigungselement (173) Massepotential erhält. (Fig.7)

21. Überwachungseinrichtung nach Anspruch 17, *dadurch gekennzeichnet*, *daß* als Schalterkontakt mindestens ein isolierend an der Seitenwandung der zweiten Kammer (40b) befestigtes Federelement (181) vorgesehen ist, das zum Kolbenteller (43) hin weist und bei dem vorbestimmten Kolbenhub durch diesen Massepotential erhält. (Fig.8)

22. Überwachungseinrichtung nach Anspruch 21, *dadurch gekennzeichnet*, *daß* das Federelement (181) mittels einer Steckerbuchse (182) an der Seitenwandung der zweiten Kammer (40b) befestigt ist und elektrisch mit deren Anschlußstift (182a) verbunden ist.

23. Überwachungseinrichtung nach Anspruch 17, *dadurch gekennzeichnet*, *daß* als Schalterkontakt ein in geringem Abstand zur kammerinneren Fläche des Kolbentellers (43) angeordnetes Kontaktelement (191) vorgesehen ist, das von einer Druckfeder (192) unter einer der Druckfeder (41) des Kolbens (47, 48) entgegengerichteten Druckspannung steht, die bei dem vorbestimmten Kolbenhub vom Druck der Druckfeder (41) überwunden wird, worauf das Kontaktelement (191) die Kolbentellerfläche kontaktiert. (Fig.9A, 9B)

24. Überwachungseinrichtung nach Anspruch 23, *dadurch gekennzeichnet*, *daß* das Kontaktelement (191) über die gegenüber den anderen Teilen des Bremszylinders (40) isolierend montierte Druckfeder (41) des Kolbens (47, 48) elektrisch mit einer Steckerbuchse (196) verbunden ist.

25. Überwachungseinrichtung nach Anspruch 23, *dadurch gekennzeichnet*, *daß* das Kontaktelement (191) über eine den Kolben (47, 48) umgebende Spiralfeder (199) elektrisch mit einer Steckerbuchse (196) verbunden ist. (Fig.9B)

26. Überwachungseinrichtung nach einem der Ansprüche 23 bis 25, *dadurch gekennzeichnet*, *daß* das Kontaktelement (191) auf einer parallel zur kammerinneren Fläche des Kolbentellers (43) angeordneten Scheibe (193) befestigt ist und aus einem Ringkontakt oder aus mehreren gleichmäßig am Umfang der Scheibe (193) angeordneten Einzelkontakten besteht.

27. Überwachungseinrichtung nach einem der Ansprüche 23 bis 26, *dadurch gekennzeichnet*, *daß* das Kontaktelement (191) und die kammerinneren Fläche des Kolbentellers derart mit einer elastischen Dichtung (198) versehen sind, daß die Kontaktflächen korrosionsgeschützt sind. (Fig.9B)
